# EUROPEAN PATENT APPLICATION

(11) **EP 4 790 691 A1**
(43) Date of publication of application: **12.08.2026**
(21) Application number: 24888987.5
(22) Date of filing: 24.10.2024
(51) Int. Cl.: G09G 3/00, G09G 3/20, G06F 3/04847, G06F 3/00, G06F 1/16

(54) **ELECTRONIC DEVICE, METHOD, AND STORAGE MEDIUM FOR CONTROLLING BRIGHTNESS OF DISPLAY**

(30) Priority: 06.11.2023 KR 20230151584; 29.12.2023 KR 20230196868
(71) Applicant: Samsung Electronics Co., Ltd., Suwon-si, Gyeonggi-do 16677 (KR)
(72) Inventor: OH, Jaemin, Suwon-si, Gyeonggi-do 16677 (KR); OH, Deukkyu, Suwon-si, Gyeonggi-do 16677 (KR); KIM, Seonghun, Suwon-si, Gyeonggi-do 16677 (KR); SO, Hyeonbin, Suwon-si, Gyeonggi-do 16677 (KR); AN, Jinwan, Suwon-si, Gyeonggi-do 16677 (KR); WOO, Kwangtaek, Suwon-si, Gyeonggi-do 16677 (KR)
(74) Representative: Gulde & Partner
(86) International application number: PCT/KR2024/016292
(87) International publication number: WO 2025/100798

(57) **Abstract**

Provided are an electronic device, a method, and a storage medium for adjusting the brightness of a display. The electronic device comprises: a housing including a first housing and a second housing rotating with respect to a hinge; a display included in the first housing and the second housing, and foldable with respect to a boundary line between the first housing and the second housing; a processor; and a memory for storing instructions executed by the processor. The instructions stored in the memory instruct the electronic device to display a first image on a first display area included in the first housing and display a second image on a second display area included in the second housing. The instructions identify color values of the first display area and the second display area. The instructions instruct the electronic device to individually adjust the brightness of the first display area or the second display area when a difference between the identified color value of the first display area and the identified color value of the second display area is greater than or equal to a preset value.

## Description

### [Technical Field]

Embodiments of the present document relate to an electronic device, a method, and a storage medium for controlling brightness of a display.

### [Background Art]

An electronic device including a flexible display is becoming popular. Since the flexible display includes a flexible characteristic, the electronic device including the flexible display may be in a foldable form factor. The flexible display included in the electronic device is one as a whole, but, by the form factor of the electronic device, it may be recognized as an upper display part and a lower display part. Accordingly, the upper display part and the lower display part may each display different images. For example, the upper display part may display a moving image, and the lower display part may display an input image.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

An electronic device, a method, and a storage medium for controlling brightness according to the present document are for individually controlling brightness of an upper display area and a lower display area.

### [Solution to Problem]

An electronic device according to various embodiments of the present document may comprise a housing comprising a first housing and a second housing rotating with respect to a hinge, a display included in the first housing and the second housing and being folded with respect to a boundary line between the first housing and the second housing, at least one processor comprising a processing circuit, and a memory storing instructions executed individually or collectively by the at least one processor. The instructions stored in the memory may be set to cause the electronic device to display a first image on a first display area in which at least a part is included in the first housing, and to display a second image on a second display area in which at least a part is included in the second housing. The instructions stored in the memory may be set to cause the electronic device to identify color values of the first display area and the second display area. The instructions stored in the memory may be set to cause the electronic device to, when a difference between the identified color value of the first display area and the identified color value of the second display area is greater than or equal to a preset value, execute a brightness adjustment mode for individually adjusting brightness of the first display area or the second display area.

A method for controlling brightness of a display included in a first housing and a second housing rotating with respect to a hinge and being folded with respect to a boundary line between the first housing and the second housing, according to various embodiments of the present document, may comprise displaying a first image on a first display area in which at least a part is included in the first housing, and display a second image on a second display area in which at least a part is included in the second housing. The method may comprise identifying color values of the first display area and the second display area. The method may comprise, when a difference between a color value of the first display area and the identified color value of the second display area is greater than or equal to a preset value, executing a brightness adjustment mode for individually adjusting brightness of the first display area or the second display area.

A non-transitory computer-readable storage medium in which a program for performing a method for controlling brightness of a display according to various embodiments of the present document is recorded may perform displaying a first image on a first display area in which at least a part is included in the first housing, and displaying a second image on a second display area in which at least a part is included in the second housing. The storage medium may perform identifying color values of the first display area and the second display area. The storage medium may perform, when a difference between the identified color value of the first display area and the identified color value of the second display area is greater than or equal to a preset value, executing a brightness adjustment mode for individually adjusting the brightness of the first display area or the second display area.

### [Advantageous Effects of Invention]

According to various embodiments of the present document, an electronic device, a method, and a storage medium for controlling brightness may reduce an influence by light of a lower display area on an upper display area by individually controlling brightness of the upper display area and the lower display area.

Also, the electronic device, the method, and the storage medium for controlling brightness may reduce current consumption by partially controlling the brightness of the display.

The effects of the present disclosure are not limited to the effects mentioned above, and other effects not mentioned will be clearly understood by those skilled in the art from the description below.

### [Brief Description of Drawings]

FIG. 1 is a block diagram of an electronic device within a network environment according to various embodiments.
FIG. 2 is a block diagram explaining a configuration of an electronic device according to various embodiments.
FIG. 3A, FIG. 3B, and FIG. 3C are views explaining an electronic device displaying a plurality of images according to various embodiments.
FIG. 4 is a view illustrating a side surface of an electronic device being folded according to various embodiments.
FIG. 5A, FIG. 5B, and FIG. 5C are views explaining a brightness adjustment UI for individually controlling brightness of a plurality of display areas according to various embodiments.
FIG. 6A and FIG. 6B are views explaining an activation function of a brightness adjustment UI according to various embodiments.
FIG. 7 is a flowchart explaining a method for controlling brightness according to various embodiments.

### [Mode for the Invention]

Hereinafter, embodiments of the present disclosure will be described in detail with reference to the accompanying drawings so that those with ordinary skill in the art to which the present disclosure pertains may easily carry out the embodiments. However, the present disclosure may be implemented in various different ways and is not limited to the embodiments described herein. In connection with the description of the drawings, the similar or same reference numerals may be used for the similar or same constituent elements. In addition, in the drawings and related descriptions, the description of well-known features and configurations may be omitted for clarity and conciseness.

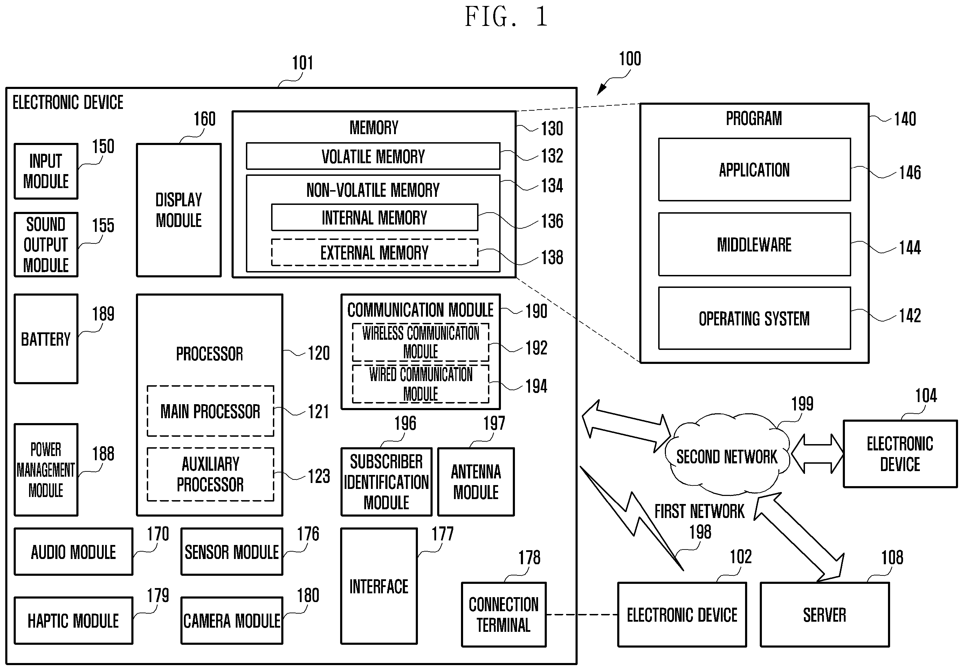

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

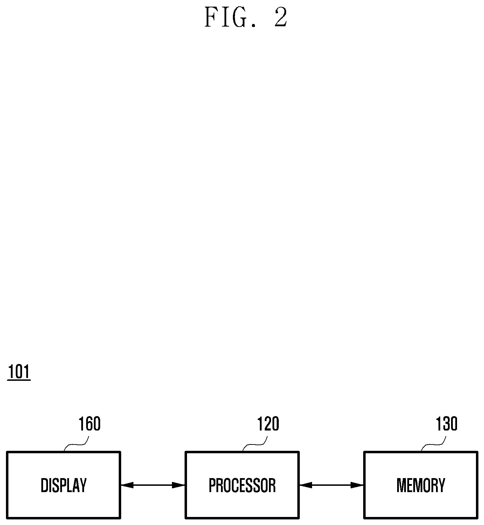

FIG. 2 is a block diagram explaining a configuration of an electronic device according to various embodiments.

With reference to FIG. 2, an electronic device 101 may include a processor 120, a memory 130, and a display 160.

The display 160 (e.g., the display module 160 of FIG. 1) may be a flexible display. Also, the display 160 may be a touch screen receiving a touch input. The display 160 may be included in a housing of the electronic device 101 (e.g., the electronic device 101 of FIG. 1). The electronic device 101 includes a hinge, and may include a first housing (or, an upper housing) and a second housing (or, a lower housing) rotating with respect to the hinge. The display 160 is included in the first housing and the second housing, and may be folded (i.e., foldable) with respect to a boundary line between the first housing and the second housing by the hinge. The display 160 may be implemented as one, and a part included in the first housing may be referred to as a first display part, and a part included in the second housing may be referred to as a second display part.

The display 160 may output data processed in the processor 120 (e.g., the processor 120 of FIG. 1) as an image. The display 160 may display a plurality of different images. For example, the first display part displays a first application, and the second display part may display a second application. Alternatively, the first display part displays a first image of the first application, and the second display part may display a second image of the first application. For example, the first image may include an image (e.g., a moving image) output from the first application and/or an image (e.g., a counterpart image) corresponding to the second image, and the second image may include an image (e.g., a keyboard image) input to the first application and/or an image (e.g., a user image) corresponding to the first image. The image may include a still image, a dynamic image (e.g., a moving image), a UI image (e.g., a keypad UI), and/or a real-time image input from a camera (e.g., the camera module 180 of FIG. 1).

However, an area displaying the first image may not coincide with the first display part. Also, an area displaying the second image may not coincide with the second display part. For example, the first image is displayed on an entire area of the first display part and a partial area of the second display part, and the second image may be displayed on a remaining area of the second display part. Alternatively, the first image is displayed on a partial area of the first display part, and the second image may be displayed on a remaining area of the first display part and the entire area of the second display part. In the present document, an area where an image is displayed will be referred to as a display area. That is, the display part of the present document means a unit physically dividing the display to correspond to the housing, and the display area may mean an area displaying the image.

In the above-described example, a first display area displaying the first image is the entire area of the first display part, and a second display area displaying the second image may be the entire area of the second display part. Alternatively, a first display area displaying the first image is the entire area of the first display part and a partial area of the second display part, and a second display area displaying the second image may be a remaining area of the second display part. Alternatively, a first display area displaying the first image is a partial area of the first display part, and a second display area displaying the second image may be a remaining area of the first display part and the entire area of the second display part.

The memory 130 (e.g., the memory 130 of FIG. 1) may store data, algorithms, programs, instructions, and the like performing functions of the electronic device 101 (e.g., the electronic device 101 of FIG. 1). The instructions and the like stored in the memory 130 may be loaded into the processor 120 and executed.

The processor 120 may control each configuration of the electronic device 101. The electronic device 101 may include one or more processors 120. The processor 120 may display a first image on a first display area in which at least a part is included in the first housing, and display a second image on a second display area in which at least a part is included in the second housing. The processor 120 may identify color values of the first display area and the second display area. The color value of the first display area may be a summed value of RGB values of the entire first display area, and the color value of the second display area may be a summed value of RGB values of the entire second display area. As an example, the processor 120 may identify color values of a first boundary area where the first display area contacts the second display area and a second boundary area where the second display area contacts the first display area. The boundary area may be set according to a certain criterion. For example, the certain criterion for setting the boundary area may be set as a pixel, a line, and/or a width. As an example, the processor 120 may set an area of a first width as the first boundary area based on a surface where the first display area contacts the second display area, and may set an area of a second width as the second boundary area based on a surface where the second display area contacts the first display area. The color value of the boundary area may be a summed value of RGB values of the entire boundary area.

The electronic device 101 of the present document is for improving inconvenience felt by a user by light radiated from one display area being reflected from another display area. The first display area and the second display area may display different images. When a video displayed on the second display area is very bright, light may be radiated from the second display area. A foldable electronic device may be used in a flexible mode. The flexible mode may mean a mode in a state where an angle (e.g., an inner angle) between the first housing (or, the first display part) and the second housing (or, the second display part) exceeds 0 degree and is less than 180 degrees. As an example, the second housing is located on a floor, and an angle formed by the first housing with the second housing may be 90 degrees. In this case, when the video displayed on the second display area is very bright and the video displayed on the first display area is dark, the light radiated from the second display area may affect the first display area.

However, an affected area among the first display area may be a partial area (e.g., a boundary area) contacting the second display area. Also, as the angle (inner angle) between the first display area and the second display area becomes smaller, the first display area affected by light may become wider, and as the angle between the first display area and the second display area becomes larger, the first display area affected by light may become narrower. If the angle between the first display area and the second display area becomes a certain size or more, the first display area affected by light may be almost none or may be insignificant to an extent that the user cannot recognize.

That is, the boundary area may be an area where an influence of light between the first display area (or, the first display part, the first housing) and the second display area (or, the second display part, the second housing) exists. Accordingly, the processor 120 may use the color values of the first boundary area and the second boundary area to control the brightness of the display area. Since the boundary area is an influence where the influence of light between each display area exists, a size (e.g., an area, a width, etc.) of the first boundary area and a size of the second boundary area may be set differently from each other. Also, the size of the first boundary area and the size of the second boundary area may be set differently according to an angle between the first display part and the second display part. As an example, when the angle between the first display part and the second display part is 60 degrees to 90 degrees, the first boundary area is set to a width of 300 pixels in a direction of the first display area from a surface (or, a boundary line) where the first display area contacts the second display area, and the second boundary area may be set to a width of 500 pixels in a direction of the second display area from a surface where the second display area contacts the first display area. Also, when the angle between the first display part and the second display part is 90 degrees to 120 degrees, the first boundary area is set to a width of 100 pixels in the direction of the first display area from the surface where the first display area contacts the second display area, and the second boundary area may be set to a width of 300 pixels in the direction of the second display area from the surface where the second display area contacts the first display area. The above-described example is an embodiment, and the size of the boundary area may be set in various ways.

The electronic device 101 may include a screen output module (e.g., SurfaceFlinger) outputting a generated screen to the display 160, and the screen output module may include image data (e.g., surface data) for outputting the screen. For example, the electronic device 101 may determine the color value of the first display area by summing RGB values of each pixel of the first display area based on the image data. Further, the electronic device 101 may determine the color value of the second display area by summing RGB values of each pixel of the second display area. The brightness of the display 160 may be in a range of 0 to 100%, and the electronic device 101 may determine the brightness of the display 160 according to activation of RGB elements. For example, when the electronic device 101 displays a red screen, a green screen, and a blue screen on the display 160, the brightness of the display 160 may be about 190 in the red screen, about 310 in the green screen, and about 140 in the blue screen. Further, an average summed brightness may be about 640. Illuminance detected when the electronic device 101 displays a white screen by activating all RGB elements may be about 630. Accordingly, when a color is displayed on the display 160, the average summed brightness of the color may be similar to the brightness of the display 160. Further, the color value of the RGB element may be related to brightness. For example, a summed value of about 30% of an R color value, about 48% of a G color value, and about 22% of a B color value of the RGB element of the display 160 may be similar to the brightness of the display 160.

The processor 120 may calculate a difference between the identified color value of the first display area and the identified color value of the second display area. When the difference between the color value of the first display area and the color value of the second display area is greater than or equal to a preset value, the processor 120 may execute (or implement) a brightness adjustment mode for adjusting the brightness of the first display area and/or the second display area. For example, the first image displayed on the first display area may be a moving image. In the moving image, a displayed screen may continuously change according to a frame rate. The processor 120 may identify an average color value of the first display area and an average color value of the second display area during a preset time. Further, when a difference between the identified average color value of the first display area and the identified average color value of the second display area is greater than or equal to a preset value, the processor 120 may execute the brightness adjustment mode. The processor 120 may execute the brightness adjustment mode and automatically adjust the brightness of the first display area and/or the second display area without intervention of the user. For example, when the identified color value of the second boundary area is brighter than the identified color value of the first boundary area, the processor 120 may automatically adjust the brightness of the second display area to be dark.

As an example, the electronic device 101 may determine an overall color value by summing RGB values of each pixel of the boundary areas 21 and 22 based on the image data.

The processor 120 may calculate a difference between the identified color value of the first boundary area and the identified color value of the second boundary area. When a difference between the color value of the first boundary area and the color value of the second boundary area is greater than or equal to a preset value, the processor 120 may execute a brightness adjustment mode for adjusting the brightness of the first display area and/or the second display area. As an example, the processor 120 may identify an average color value of the first boundary area and an average color value of the second boundary area during a preset time. Further, when a difference between the identified average color value of the first boundary area and the identified average color value of the second boundary area is greater than or equal to a preset value, the processor 120 may execute the brightness adjustment mode. The processor 120 may execute the brightness adjustment mode and automatically adjust the brightness of the first display area and/or the second display area without intervention of the user. For example, when the identified color value of the second boundary area is brighter than the identified color value of the first boundary area, the processor 120 may automatically adjust the brightness of the second display area to be dark.

If the electronic device 101 is in an unfolded state (e.g., an angle between the first housing and the second housing is 180 degrees), even if the difference between the color values of the boundary area is greater than or equal to the preset value, the light radiated from the second display area may not affect the first display area (or, may hardly affect, or may be insignificant to an extent that the user cannot perceive). Accordingly, the processor 120 may execute the brightness adjustment mode when the angle between the first housing and the second housing is within a certain range.

For example, when the first housing and/or the second housing is in a partially folded state or a partially unfolded state, the processor 120 may execute the brightness adjustment mode. The partially folded state or the partially unfolded state of the first housing and/or the second housing may be a state where the angle between the first housing and the second housing exceeds about 0 degree and is less than about 180 degrees.

Alternatively, the electronic device 101 may include a camera. The camera may be disposed on an inner surface of the first housing. According to the angle between the first housing and the second housing, the second display part (or, the second display area) may be included in a viewing angle of the camera. As an example, when the angle between the first housing and the second housing is an obtuse angle (e.g., 150 degrees), the second display part may not be included in the viewing angle of the camera disposed on the inner surface of the first housing. Alternatively, when the angle between the first housing and the second housing is an acute angle (e.g., 60 degrees), the second display part may be included in the viewing angle of the camera disposed on the inner surface of the first housing. The processor 120 may execute the brightness adjustment mode when the second display area is included in the viewing angle range of the camera.

As described above, the display part is a unit physically dividing the display to correspond to the housing, and the display area may be an area where an image is displayed. Accordingly, the second display part and/or the second display area may be included in the viewing angle of the camera. However, a condition for the processor 120 to execute the brightness adjustment mode may be a condition where the second display area is included in the viewing angle of the camera.

Also, when ambient brightness is very bright, the light radiated from the second display area may not affect the first display area due to the ambient brightness. Accordingly, the processor 120 measures ambient illuminance, and may execute the brightness adjustment mode based on the measured illuminance.

For example, the electronic device 101 may include an illuminance sensor. The processor 120 may measure (detect) ambient illuminance (brightness) using the illuminance sensor. The processor 120 may execute the brightness adjustment mode when the measured ambient illuminance is less than a preset illuminance. Alternatively, the electronic device 101 may include a camera. The processor 120 may photograph (or capture) an image using the camera. For example, the camera may be disposed on an outer surface and/or an inner surface of the first housing. The photographed image may include an ambient subject (or, background) including light information. The processor 120 may obtain RGB values from the photographed image, and convert the obtained RGB values into YCbCr values.

The processor 120 may convert RGB to YCbCr using the following equation.$Y = {K}_{R} * R + {K}_{G} * G + {K}_{B} * B$$Cb = 0.5 * \left(B-Y\right) / \left(1-{K}_{B}\right)$$Cr = 0.5 * \left(R-Y\right) / \left(1-{K}_{R}\right)$

Here, K_{R} + K_{G} + K_{B} = 1, and as an example, K_{R} may be 0.299, K_{G} may be 0.587, and K_{B} may be 0.114. However, the above-described K_{R}, K_{G,} and K_{B} are an example, and may be set to different values according to specifications of the display, etc.

In YCbCr, Y may be a luminance (brightness) component. Accordingly, the processor 120 may identify ambient brightness information from the converted YCbCr. The processor 120 may execute the brightness adjustment mode when the identified brightness information is less than a preset value.

The processor 120 may adjust the brightness of the first display area and/or the second display area according to a user input. The processor 120 may display a brightness adjustment UI for adjusting the brightness of the first display area and/or the second display area on the display 160. The processor 120 may individually or overall adjust the brightness of the first display area and the brightness of the second display area according to a user input through the brightness adjustment UI.

When a preset touch gesture or motion gesture is input from the user, the processor 120 may display the brightness adjustment UI on the display. The brightness adjustment UI may include a control item activating brightness adjustment of an individual display area. For example, when the control item is activated, the processor 120 may individually adjust the brightness of the first display area and/or the second display area according to a user input. Alternatively, when the control item is deactivated, the processor 120 may overall adjust the brightness of the first display area and the second display area according to a user input.

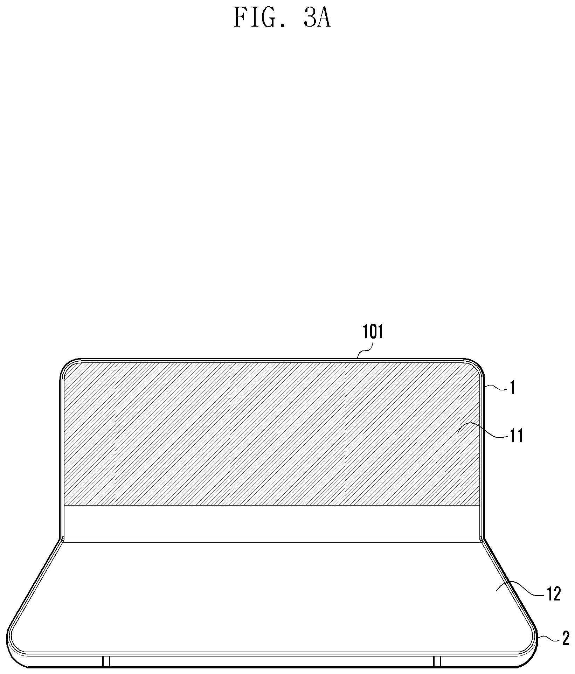

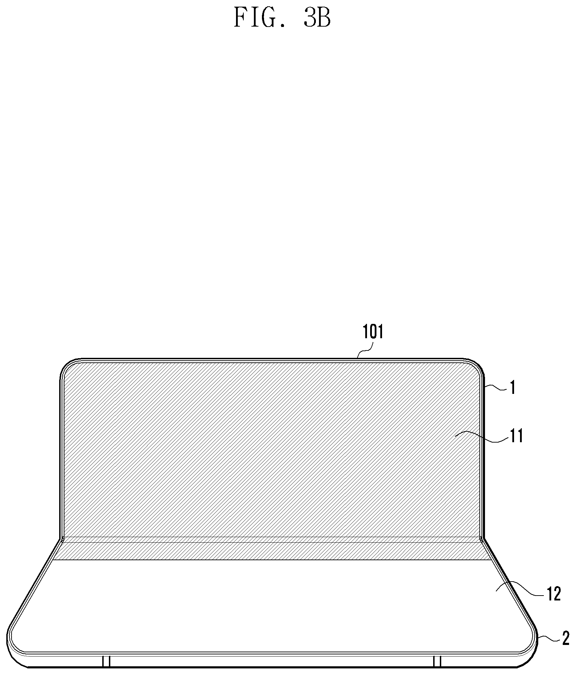

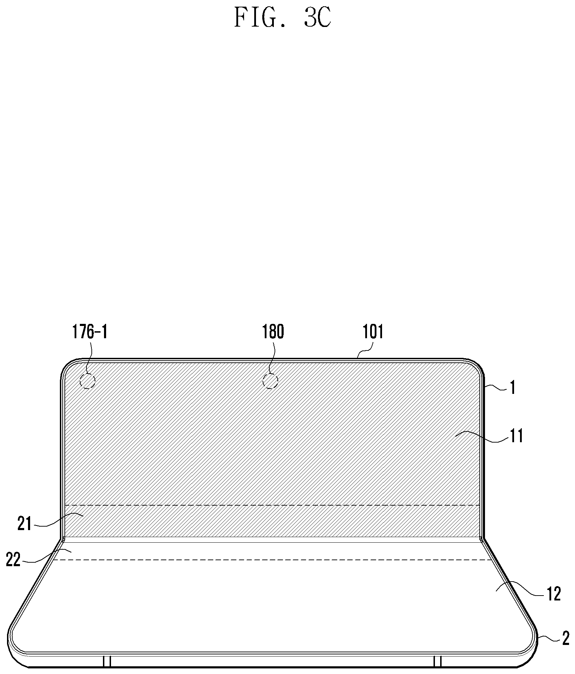

FIG. 3A, FIG. 3B, and FIG. 3C are views explaining an electronic device displaying a plurality of images according to various embodiments.

With reference to FIG. 3A, the electronic device 101 displays a first image on a partial area of a first display part 1, and may display a second image on a remaining area of the first display part 1 and an entire area of a second display part 2. As described above, the display part is a unit physically dividing the display to correspond to a housing, and a display area may be an area where an image is displayed. That is, a first display area 11 displaying the first image is the partial area of the first display part 1, and a second display area 12 displaying the second image may be the remaining area of the first display part 1 and the entire area of the second display part 2.

With reference to FIG. 3B, the electronic device 101 displays the first image on the entire area of the first display part 1 and a partial area of the second display part 2, and may display the second image on a remaining area of the second display part 2. That is, the first display area 11 displaying the first image is the entire area of the first display part 1 and the partial area of the second display part 2, and the second display area 12 displaying the second image may be the remaining area of the second display part 2.

With reference to FIG. 3C, the electronic device 101 displays the first image on the entire area of the first display part 1, and may display the second image on the entire area of the second display part 2. That is, the first display area 11 displaying the first image is the entire area of the first display part 1, and the second display area 12 displaying the second image may be the entire area of the second display part 2.

For example, the electronic device 101 may identify coordinate information of a lower end part of the first display area 11 and coordinate information of an upper end part of the second display area 12. The electronic device 101 may determine a first boundary area 21 and a second boundary area 22 based on the identified coordinate information of the lower end part of the first display area 11 and the coordinate information of the upper end part of the second display area 12. As an example, the electronic device 101 may set an area formed by a preset number of pixels, lines, and/or a width based on y-coordinates of left and right lower points of the identified first display area 11 as the first boundary area 21. Also, the electronic device 101 may set an area formed by a preset number of pixels, lines, and/or a width based on y-coordinates of left and right upper points of the identified second display area 12 as the second boundary area 22. Alternatively, the electronic device 101 may determine the lower end part of the first display area 11 and the upper end part of the second display area 12 based on information of various sensors such as a gyro sensor, a proximity sensor, and/or an optical sensor. Further, the electronic device 101 may set a boundary area based on the determined lower end part of the first display area 11 and the upper end part of the second display area 12.

The electronic device 101 may identify color values of the first boundary area 21 where the first display area 11 contacts the second display area 12 and the second boundary area 22 where the second display area 12 contacts the first display area 11. As described above, the color value may be related to brightness. Accordingly, the electronic device 101 may determine the brightness of the display area based on the identified color value. The electronic device 101 may calculate a difference between the color value of the first boundary area 21 and the color value of the second boundary area 22. When the difference between the color value of the first boundary area 21 and the color value of the second boundary area 22 is greater than or equal to a preset value, the electronic device 101 may execute a brightness adjustment mode for adjusting the brightness of the first display area and/or the second display area.

The electronic device 101 may include an illuminance sensor 176-1 and/or a camera 180 on an inner surface and/or an outer surface of the first display part 1. As described above, an influence of light radiated from the second display area 12 may vary according to ambient brightness. Accordingly, the electronic device 101 measures ambient brightness using the illuminance sensor 176-1 and/or the camera 180, and may execute the brightness adjustment mode based on the measured ambient brightness.

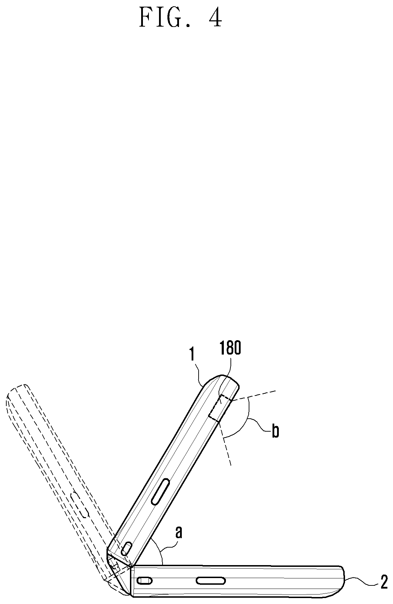

FIG. 4 is a view illustrating a side surface of an electronic device being folded according to various embodiments.

With reference to FIG. 4, the electronic device 101 may include a first display part 1 (or, a first housing) and a second display part 2 (or, a second housing). The electronic device 101 includes a hinge, and the first display part 1 (or, the first housing) and the second display part 2 (or, the second housing) may rotate with respect to the hinge.

When it is a condition where light radiated from the second display area 12 affects the first display area 11, the electronic device 101 may execute the brightness adjustment mode. For example, when an angle a between the first display part 1 and the second display part 2 is 60 degrees or more and 120 degrees or less, the electronic device 101 may execute the brightness adjustment mode. The specific angle is an example, and the angle may be set differently according to a size, a length of the display part (or, display) 1 and 2, and/or a usage environment of the user.

Alternatively, the electronic device 101 may include the camera 180 disposed on the inner surface of the first housing. The camera 180 may photograph an object within a viewing angle range b. According to the angle between the first housing (or, the first display part 1) and the second housing (or, the second display part 2), the second display area 12 may be included in the viewing angle range b of the camera. The electronic device 101 may execute the brightness adjustment mode when the second display area 12 is included in the viewing angle range b of the camera.

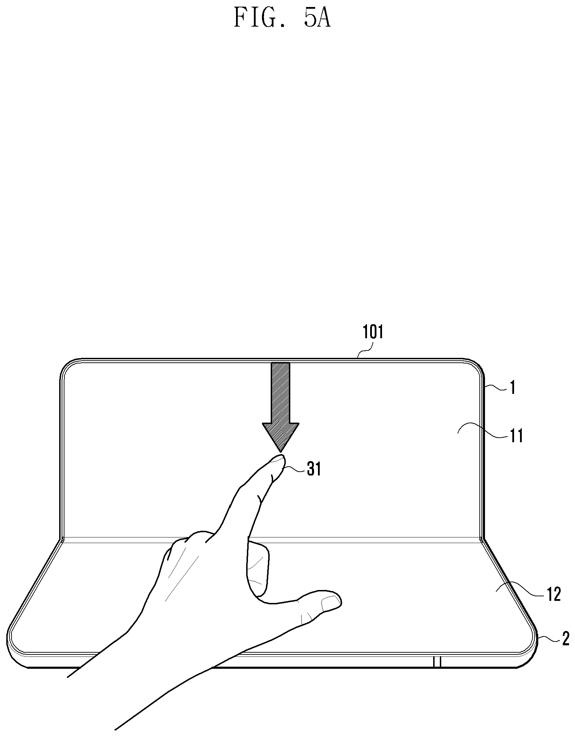

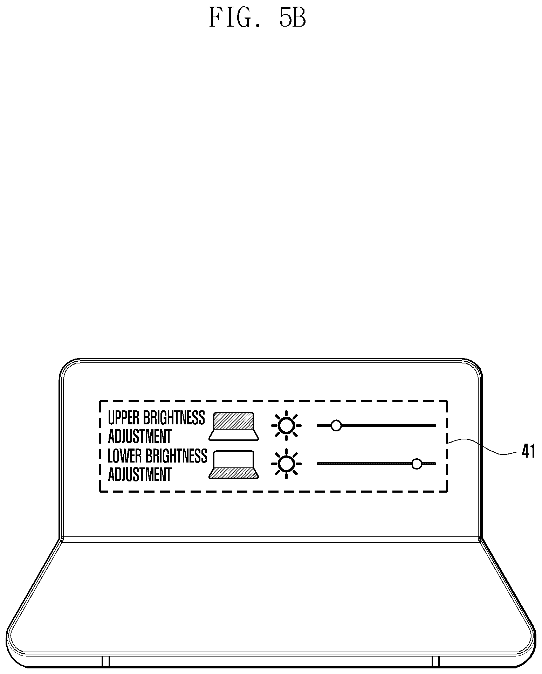

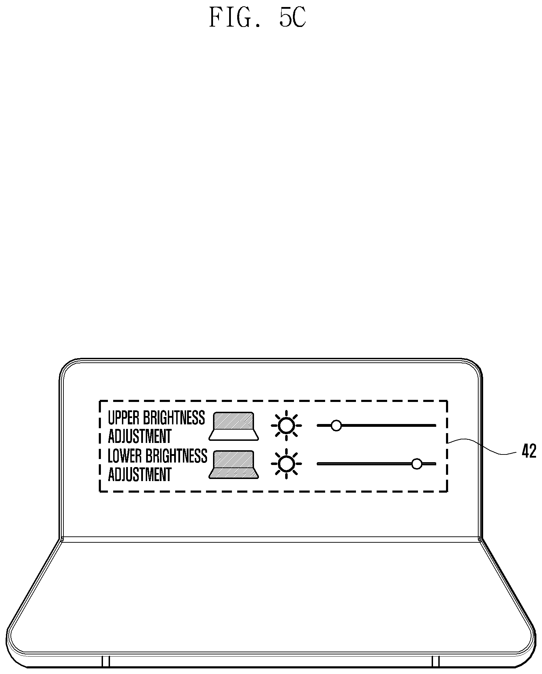

FIG. 5A, FIG. 5B, and FIG. 5C are views explaining a brightness adjustment UI for individually controlling brightness of a plurality of display areas according to various embodiments.

With reference to FIG. 5A, the electronic device 101 may receive a preset user input 31 on the first display part 1 or the second display part 2. For example, the electronic device 101 may receive a preset touch gesture or motion gesture from the user.

With reference to FIG. 5B, the electronic device 101 may display a brightness adjustment UI 41 in response to the user input 31. Alternatively, the electronic device 101 is used in a flexible mode, and when it is necessary to execute the brightness adjustment mode, the electronic device 101 may display the brightness adjustment UI 41. For example, the brightness adjustment mode may be executed by automatic, manual, or user input. When the brightness adjustment mode is set to automatic, when a difference between color values of the first boundary area 21 and the second boundary area 22 is greater than or equal to a preset value, the electronic device 101 may automatically control the brightness of the first display area 11 or the second display area 12. When the brightness adjustment mode is set to manual, when the difference between the color values of the first boundary area 21 and the second boundary area 22 is greater than or equal to the preset value, the electronic device 101 may display the brightness adjustment UI 41. In this case, the electronic device 101 may display the brightness adjustment UI 41 along with a message stating, "Reflection of the display is expected, so the brightness adjustment mode is executed." Alternatively, as described in FIG. 5A, the electronic device 101 displays the brightness adjustment UI 41 according to a preset input, and may execute the brightness adjustment mode according to a user input received on the brightness adjustment UI 41.

The brightness adjustment UI 41 illustrated in FIG. 5B may include an item for adjusting the brightness of the first display area 11 and an item for adjusting the brightness of the second display area 12. The electronic device 101 adjusts the brightness of the first display area 11 according to a user input received in the item for adjusting the brightness of the first display area 11, and may adjust the brightness of the second display area 12 according to a user input received in the item for adjusting the brightness of the second display area 12. That is, the electronic device 101 may individually control the brightness of the first display area 11 and the brightness of the second display area 12.

With reference to FIG. 5C, a brightness adjustment UI 42 including an item for adjusting the brightness of the first display area 11 and an item for adjusting the brightness of the entire display area is illustrated. When a difference between the brightness of the first display area 11 and the brightness of the second display area 12 is within a preset range, the electronic device 101 may display the brightness adjustment UI 42 illustrated in FIG. 5C. For example, when an output mode of the display 160 is a night mode, the electronic device 101 may display the brightness adjustment UI illustrated in FIG. 5C. The electronic device 101 adjusts the brightness of the first display area 11 according to a user input received in the item for adjusting the brightness of the first display area 11, and may simultaneously adjust the brightness of the entire display area according to a user input received in the item for adjusting the brightness of the entire display area.

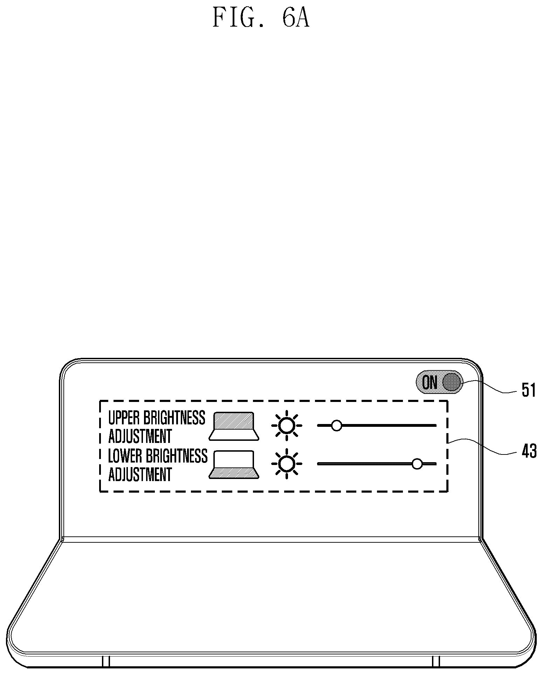

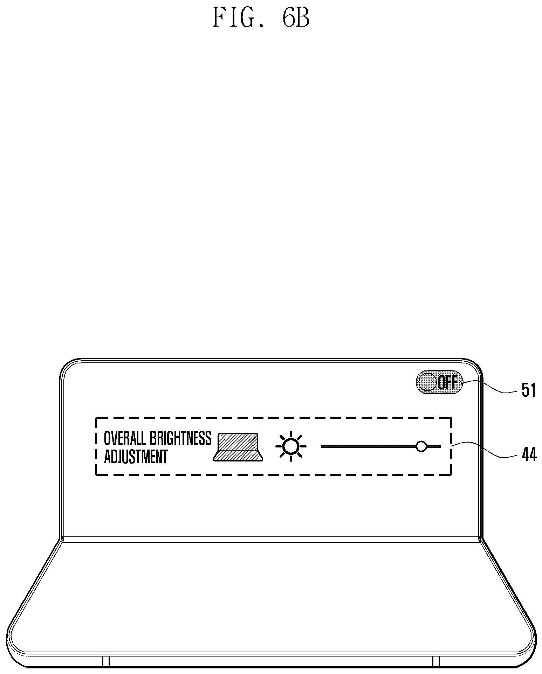

FIG. 6A and FIG. 6B are views explaining an activation function of a brightness adjustment UI according to various embodiments. The items displayed on the brightness adjustment UI may vary according to whether it is activated.

With reference to FIG. 6A, a brightness adjustment UI 43 may include a control item 51 activating brightness adjustment of an individual display area. When the control item 51 is in an activated state (or, an on state), the brightness adjustment UI 43 may include an item for adjusting the brightness of the first display area 11 and an item for adjusting the brightness of the second display area 12. The electronic device 101 may individually control the brightness of the first display area 11 and the brightness of the second display area 12 according to a user input.

With reference to FIG. 6B, the control item 51 of a brightness adjustment UI 44 may be in a deactivated state (or, an off state). When the control item 51 is in the deactivated state, the brightness adjustment UI 44 may include an item for adjusting the brightness of the entire display area. The electronic device 101 may simultaneously control the brightness of the entire display area according to a user input.

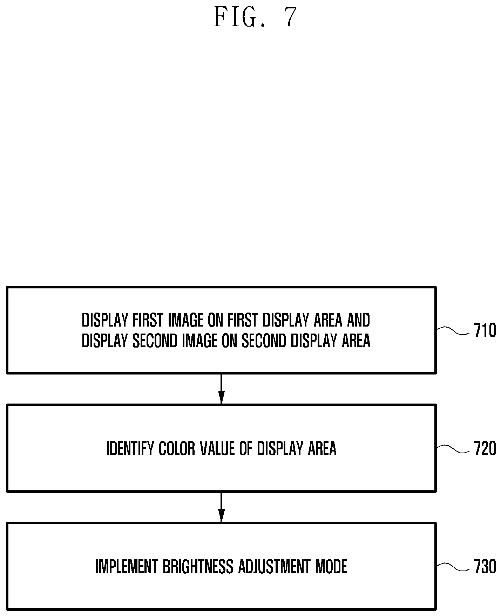

FIG. 7 is a flowchart explaining a method for controlling brightness according to various embodiments.

In the embodiments below, each operation may be performed sequentially, but is not necessarily performed sequentially. For example, an order of each operation may be changed, and at least two operations may be performed in parallel.

According to an embodiment, 710 to 730 may be understood as being performed in a processor (e.g., the processor 120 of FIG. 2) of an electronic device (e.g., the electronic device 101 of FIG. 2).

With reference to FIG. 7, the electronic device 101 may display a first image on a first display area, and display a second image on a second display area (710). The electronic device 101 includes a hinge, and may include a first housing and a second housing being folded/unfolded with respect to the hinge. The display 160 may be a flexible display. The display 160 may be physically one display, but a first display part may be included in the first housing, and a second display part may be included in the second housing. Further, the electronic device 101 may display the first image on at least a part of the first display part, and display the second image on at least a part of the second display part. An area where the first image is displayed may be the first display area, and an area where the second image is displayed may be the second display area.

The electronic device 101 may identify a color value of the display area (720). The electronic device 101 may identify a color value of the first display area and a color value of the second display area. For example, the color value of the first display area may include a first summed value summing an R color value of a preset first ratio, a G color value of a preset second ratio, and a B color value of a preset third ratio. The color value of the second display area may include a second summed value summing the R color value of the preset first ratio, the G color value of the preset second ratio, and the B color value of the preset third ratio. As an example, the color value of the first display area includes an average color value of the first display area during a preset time, and the color value of the second display area may include an average color value of the second display area during the preset time.

As an example, the color value of the display area may include a color value of a boundary area of the first display area and a color value of a boundary area of the second display area. The electronic device 101 may obtain information (e.g., coordinate information) on the first display area and information on the second display area. Further, the electronic device 101 may identify a first boundary area and a second boundary area based on the obtained information on the first display area and the information on the second display area. For example, the first boundary area is included in the first display area, and may be an area contacting the second display area. The second boundary area is included in the second display area, and may be an area contacting the first display area. The electronic device 101 may identify a color value of the first boundary area and a color value of the second boundary area. The color value of the boundary area may be a summed value of RGB values of the entire boundary area. Alternatively, when the first display area and/or the second display area displays a video that continuously changes, the electronic device 101 may identify an average color value of the first boundary area and an average color value of the second boundary area during the preset time.

The electronic device 101 may execute a brightness adjustment mode (730). The electronic device 101 may, when a difference between the color value of the first display area and the color value of the second display area is greater than or equal to a preset value, adjust brightness of the first display area and/or the second display area (execution of the brightness adjustment mode).

As an example, the electronic device 101 may, when a difference between the color value of the first boundary area and the color value of the second boundary area is greater than or equal to the preset value, adjust the brightness of the first display area and/or the second display area. The electronic device 101 may, when a difference between the average color value of the first boundary area and the average color value of the second boundary area is greater than or equal to the preset value, execute the brightness adjustment mode. The average color value of the boundary area may be an average of summed values of RGB values of the entire boundary area of each image. The electronic device 101 may, when the color value of the second boundary area is brighter than the color value of the first boundary area, adjust the brightness of the second display area to be dark.

The electronic device 101 may execute the brightness adjustment mode under certain conditions in addition to the difference in the color value of the boundary area. For example, the electronic device 101 may, when the first housing and the second housing are in a partially folded state or a partially unfolded state (e.g., when an angle between the first housing and the second housing is about 30 degrees or more and about 120 degrees or less), execute the brightness adjustment mode. Alternatively, the electronic device 101 may detect ambient brightness. The electronic device 101 may, when the detected ambient brightness is less than a preset brightness, execute the brightness adjustment mode. For example, the electronic device 101 includes an illuminance sensor 176-1, and may execute the brightness adjustment mode based on illuminance detected by the illuminance sensor. Alternatively, the electronic device 101 may include a camera 180. The electronic device 101 may photograph an image using the camera 180. The electronic device 101 obtains RGB values from the photographed image, and may convert the obtained RGB values into YCbCr values. The electronic device 101 may identify ambient brightness information from the converted YCbCr values. The electronic device 101 may, when the identified ambient brightness information is less than a preset value, execute the brightness adjustment mode. Alternatively, the electronic device 101 may include the camera 180 on an inner surface of the second housing. The electronic device 101 may, when the first display area is included in a viewing angle range of the camera 180 included in the second housing, execute the brightness adjustment mode.

The electronic device 101 may execute the brightness adjustment mode according to a user input. For example, a user input may include a preset touch gesture or motion gesture. The electronic device 101 may, when a user input is received, display a brightness adjustment UI. The brightness adjustment UI may include an item for adjusting the brightness of the first display area, an item for adjusting the brightness of the second display area, and/or an item for adjusting the brightness of the entire display area. When the item for adjusting the brightness of the first display area and the item for adjusting the brightness of the second display area are included in the brightness adjustment UI, the electronic device 101 may individually control the brightness of the first display area and/or the second display area according to a user input.

Also, the brightness adjustment UI may include a control item activating brightness adjustment of an individual display area. When the control item is activated, the brightness adjustment UI may include the item for adjusting the brightness of the first display area and the item for adjusting the brightness of the second display area. The electronic device 101 may individually control the brightness of the first display area and/or the second display area. Alternatively, when the control item is deactivated, the brightness adjustment UI may include the item for adjusting the brightness of the entire display area. The electronic device 101 may overall control the brightness of the entire display area including the first display area and the second display area.

As an example, an electronic device 101 for controlling brightness of a display 160 may include a housing including a first housing and a second housing rotating with respect to a hinge, the display 160 included in the first housing and the second housing and being folded with respect to a boundary line between the first housing and the second housing, at least one processor 120 including a processing circuit, and a memory 130 storing instructions executed individually or collectively by the at least one processor. The instructions stored in the memory 130 may cause (or instruct) the electronic device 101 to display a first image on a first display area 11 in which at least a part is included in the first housing, and display a second image on a second display area 12 in which at least a part is included in the second housing. The instructions stored in the memory 130 may cause the electronic device 101 to identify color values of the first display area 11 and the second display area 12. The instructions stored in the memory 130 may be set to cause the electronic device 101 to, when a difference between the identified color value of the first display area and the identified color value of the second display area is greater than or equal to a preset value, execute a brightness adjustment mode for individually adjusting the brightness of the first display area 11 or the second display area 12.

As an example, the instructions stored in the memory 130 may be set to cause the electronic device 101 to identify a color value of a first boundary area which is an area of a first width based on a surface where the first display area contacts the second display area, and identify a color value of a second boundary area which is an area of a second width based on a surface where the second display area contacts the first display area.

The instructions stored in the memory 130 may be set to cause the electronic device 101 to set at least one of the first width and the second width based on an angle between the first housing and the second housing, decrease at least one of the first width and the second width as the angle increases, and increase at least one of the first width and the second width as the angle decreases.

As an example, the instructions stored in the memory 130 may be set to cause the electronic device 101 to identify an average color value of the first display area and an average color value of the second display area during a preset time. The instructions stored in the memory 130 may be set to cause the electronic device 101 to, when a difference between the identified average color value of the first display area and the identified average color value of the second display area is greater than or equal to the preset value, execute the brightness adjustment mode.

As an example, the color value of the first display area may include a first summed value summing an R color value of a preset first ratio, a G color value of a preset second ratio, and a B color value of a preset third ratio of the first display area. The color value of the second display area may include a second summed value summing the R color value of the preset first ratio, the G color value of the preset second ratio, and the B color value of the preset third ratio of the second display area. The instructions stored in the memory 130 may be set to cause the electronic device 101 to determine the first summed value as the brightness of the first display area, and determine the second summed value as the brightness of the second display area.

As an example, the instructions stored in the memory 130 may be set to cause the electronic device 101 to, when the identified color value of the second display area is brighter than the identified color value of the first display area, adjust the brightness of the second display area 12 to be dark.

As an example, the electronic device 101 may further include an illuminance sensor 176-1. The instructions stored in the memory 130 may be set to cause the electronic device 101 to detect ambient brightness using the illuminance sensor 176-1, and when the detected ambient brightness is less than a preset brightness, execute the brightness adjustment mode.

As an example, the electronic device 101 may further include a camera 180. The instructions stored in the memory 130 may be set to cause the electronic device 101 to photograph an image using the camera 180. The instructions stored in the memory 130 may be set to cause the electronic device 101 to obtain RGB values from the photographed image. The instructions stored in the memory 130 may be set to cause the electronic device 101 to convert the obtained RGB values into YCbCr values. The instructions stored in the memory 130 may be set to cause the electronic device 101 to identify brightness information from the converted YCbCr values. The instructions stored in the memory 130 may be set to cause the electronic device 101 to, when the identified brightness information is less than a preset value, execute the brightness adjustment mode.

As an example, the instructions stored in the memory 130 may be set to cause the electronic device 101 to display a brightness adjustment UI for adjusting at least one of the brightness of the first display area 11 and the brightness of the second display area 12 on the display 160.

As an example, the brightness adjustment UI may include a control item activating brightness adjustment of an individual display area. The instructions stored in the memory 130 may be set to cause the electronic device 101 to, when the control item is activated, individually adjust brightness of at least one area among the first display area 11 and the second display area 12 according to a user input. The instructions stored in the memory 130 may be set to cause the electronic device 101 to, when the control item is deactivated, overall adjust the brightness of the first display area 11 and the second display area 12 according to a user input.

As an example, a method for controlling brightness of a display 160 included in a first housing and a second housing rotating with respect to a hinge and being folded with respect to a boundary line between the first housing and the second housing may display a first image on a first display area 11 in which at least a part is included in the first housing, and display a second image on a second display area 12 in which at least a part is included in the second housing. The method may identify color values of the first display area 11 and the second display area 12. The method may, when a difference between the identified color value of the first display area and the identified color value of the second display area is greater than or equal to a preset value, individually adjust the brightness of the first display area 11 or the second display area 12.

As an example, the operation of identifying the color values may identify a color value of a first boundary area which is an area of a first width based on a surface where the first display area contacts the second display area, and identify a color value of a second boundary area which is an area of a second width based on a surface where the second display area contacts the first display area.

As an example, the method may further include an operation of setting at least one of the first width and the second width based on an angle between the first housing and the second housing. The operation of setting at least one of the first width and the second width may decrease at least one of the first width and the second width as the angle increases, and increase at least one of the first width and the second width as the angle decreases.

As an example, the operation of identifying the color values may identify an average color value of the first display area and an average color value of the second display area during a preset time. The operation of executing the brightness adjustment mode may, when a difference between the identified average color value of the first display area and the identified average color value of the second display area is greater than or equal to the preset value, execute the brightness adjustment mode.

As an example, the color value of the first display area may include a first summed value summing an R color value of a preset first ratio, a G color value of a preset second ratio, and a B color value of a preset third ratio of the first display area. The color value of the second display area may include a second summed value summing the R color value of the preset first ratio, the G color value of the preset second ratio, and the B color value of the preset third ratio of the second display area. The operation of identifying the color values may determine the first summed value as the brightness of the first display area, and determine the second summed value as the brightness of the second display area.

As an example, the operation of executing the brightness adjustment mode may, when the identified color value of the second display area is brighter than the identified color value of the first display area, adjust the brightness of the second display area 12 to be dark.

As an example, the operation of executing the brightness adjustment mode may detect ambient brightness, and when the detected ambient brightness is less than a preset brightness, execute the brightness adjustment mode.

As an example, the operation of executing the brightness adjustment mode may photograph an image using the camera 180. The operation of executing the brightness adjustment mode may obtain RGB values from the photographed image. The operation of executing the brightness adjustment mode may convert the obtained RGB values into YCbCr values. The operation of executing the brightness adjustment mode may identify brightness information from the converted YCbCr values. The operation of executing the brightness adjustment mode may, when the identified brightness information is less than a preset value, execute the brightness adjustment mode.

As an example, the method may display a brightness adjustment UI for adjusting at least one of the brightness of the first display area 11 and the brightness of the second display area 12.

As an example, a non-transitory computer-readable storage medium in which a program for performing a method for controlling brightness of a display included in a first housing and a second housing rotating with respect to a hinge and being folded with respect to a boundary line between the first housing and the second housing is recorded may include an operation of displaying a first image on a first display area in which at least a part is included in the first housing, and displaying a second image on a second display area in which at least a part is included in the second housing. The storage medium may include an operation of identifying color values of the first display area and the second display area. The storage medium may include an operation of, when a difference between the identified color value of the first display area and the identified color value of the second display area is greater than or equal to a preset value, executing a brightness adjustment mode for individually adjusting the brightness of the first display area or the second display area.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of the present document are not limited to the effects mentioned above, and other effects not mentioned may be clearly understood by those skilled in the art from the above description.

## Claims

1. An electronic device, comprising:
a housing comprising a first housing and a second housing rotating with respect to a hinge;
a display included in the first housing and the second housing and being folded with respect to a boundary line between the first housing and the second housing;
at least one processor comprising a processing circuit; and
a memory storing instructions executed individually or collectively by the at least one processor,
wherein the instructions stored in the memory are set to cause the electronic device to:
display a first image on a first display area in which at least a part is included in the first housing, and display a second image on a second display area in which at least a part is included in the second housing;
identify color values of the first display area and the second display area; and
when a difference between the identified color value of the first display area and the identified color value of the second display area is greater than or equal to a preset value,
execute a brightness adjustment mode for individually adjusting brightness of the first display area or the second display area.

2. The electronic device of claim 1, wherein the instructions stored in the memory are set to cause the electronic device to:
identify a color value of a first boundary area which is an area of a first width based on a surface where the first display area contacts the second display area; and
identify a color value of a second boundary area which is an area of a second width based on a surface where the second display area contacts the first display area.

3. The electronic device of claim 2, wherein the instructions stored in the memory are set to cause the electronic device to:
set at least one of the first width and the second width based on an angle between the first housing and the second housing;
decrease at least one of the first width and the second width as the angle increases; and
increase at least one of the first width and the second width as the angle decreases.

4. The electronic device of claim 1, wherein the instructions stored in the memory are set to cause the electronic device to:
identify an average color value of the first display area and an average color value of the second display area during a preset time; and
when a difference between the identified average color value of the first display area and the identified average color value of the second display area is greater than or equal to the preset value,
execute the brightness adjustment mode.

5. The electronic device of claim 1, wherein the color value of the first display area comprises a first summed value summing an R color value of a preset first ratio, a G color value of a preset second ratio, and a B color value of a preset third ratio of the first display area,
the color value of the second display area comprises a second summed value summing the R color value of the preset first ratio, the G color value of the preset second ratio, and the B color value of the preset third ratio of the second display area, and
the instructions stored in the memory are set to cause the electronic device to:
determine the first summed value as the brightness of the first display area; and determine the second summed value as the brightness of the second display area.

6. The electronic device of claim 1, wherein the instructions stored in the memory are set to cause the electronic device to:
when the identified color value of the second display area is brighter than the identified color value of the first display area,
adjust the brightness of the second display area to be dark.

7. The electronic device of claim 1, further comprising:
an illuminance sensor,
wherein the instructions stored in the memory are set to cause the electronic device to:
detect ambient brightness using the illuminance sensor; and
when the detected ambient brightness is less than a preset brightness,
execute the brightness adjustment mode.

8. The electronic device of claim 1, further comprising:
a camera,
wherein the instructions stored in the memory are set to cause the electronic device to:
photograph an image using the camera;
obtain RGB values from the photographed image;
convert the obtained RGB values into YCbCr values;
identify brightness information from the converted YCbCr values; and
when the identified brightness information is less than a preset value,
execute the brightness adjustment mode.

9. The electronic device of claim 1, wherein the instructions stored in the memory are set to cause the electronic device to:
display a brightness adjustment UI for adjusting at least one of the brightness of the first display area and the brightness of the second display area on the display.

10. The electronic device of claim 9, wherein the brightness adjustment UI comprises a control item activating brightness adjustment of an individual display area, and
the instructions stored in the memory are set to cause the electronic device to:
when the control item is activated,
individually adjust brightness of at least one area among the first display area and the second display area according to a user input; and
when the control item is deactivated,
overall adjust the brightness of the first display area and the second display area according to a user input.

11. A method for controlling brightness of a display included in a first housing and a second housing rotating with respect to a hinge and being folded with respect to a boundary line between the first housing and the second housing, the method comprising:
displaying a first image on a first display area in which at least a part is included in the first housing, and displaying a second image on a second display area in which at least a part is included in the second housing;
identifying color values of the first display area and the second display area; and
when a difference between the identified color value of the first display area and the identified color value of the second display area is greater than or equal to a preset value,
executing a brightness adjustment mode for individually adjusting brightness of the first display area or the second display area.

12. The method of claim 11, wherein the identifying of the color values comprises:
identifying a color value of a first boundary area which is an area of a first width based on a surface where the first display area contacts the second display area; and
identifying a color value of a second boundary area which is an area of a second width based on a surface where the second display area contacts the first display area.

13. The method of claim 12, further comprising:
setting at least one of the first width and the second width based on an angle between the first housing and the second housing,
wherein the setting of the at least one of the first width and the second width comprises:
decreasing at least one of the first width and the second width as the angle increases; and
increasing at least one of the first width and the second width as the angle decreases.

14. The method of claim 11, wherein the identifying of the color values comprises:
identifying an average color value of the first display area and an average color value of the second display area during a preset time, and
wherein the executing of the brightness adjustment mode comprises:
when a difference between the identified average color value of the first display area and the identified average color value of the second display area is greater than or equal to the preset value,
executing the brightness adjustment mode.

15. A non-transitory computer-readable storage medium in which a program for performing a method for controlling brightness of a display included in a first housing and a second housing rotating with respect to a hinge and being folded with respect to a boundary line between the first housing and the second housing is recorded, the method comprising:
displaying a first image on a first display area in which at least a part is included in the first housing, and displaying a second image on a second display area in which at least a part is included in the second housing;
identifying color values of the first display area and the second display area; and
when a difference between the identified color value of the first display area and the identified color value of the second display area is greater than or equal to a preset value,
executing a brightness adjustment mode for individually adjusting brightness of the first display area or the second display area.
